# EUROPÄISCHE PATENTSCHRIFT

(11) **EP 4 051 933 B1**
(45) Veröffentlichungstag und Bekanntmachung des Hinweises auf die Patenterteilung: **06.11.2024**
(21) Anmeldenummer: 20781001.1
(22) Anmeldetag: 25.09.2020
(51) Int. Cl.: F16K 7/12, F16K 7/16, F16K 21/06, F16K 1/52, F16K 31/385

(54) **VENTIL FÜR EINE SANITÄRARMATUR MIT EINEM MEMBRANVENTIL UND EINEM EINSTELLBAREN STEUERSTAB**
VALVE FOR A SANITARY FITTING, COMPRISING A MEMBRANE VALVE AND AN ADJUSTABLE CONTROL ROD
SOUPAPE POUR UNE ROBINETTERIE SANITAIRE, COMPRENANT UNE SOUPAPE À MEMBRANE ET UNE TIGE DE COMMANDE RÉGLABLE

(30) Priorität: 28.10.2019 DE 102019129059
(43) Veröffentlichungstag der Anmeldung: 07.09.2022
(73) Patentinhaber: Grohe AG, 58765 Hemer (DE)
(72) Erfinder: BUCHMÜLLER, Janik, 58239 Schwerte (DE); HOPFAUF, Harry, 59494 Soest (DE)
(86) Internationale Anmeldenummer: PCT/EP2020/076958
(87) Internationale Veröffentlichungsnummer: WO 2021/083592

(56) Entgegenhaltungen:
- EP-A1- 1 903 267
- GB-A- 2 388 888
- JP-A- 2006 022 638

## Beschreibung

Die vorliegende Erfindung betrifft ein Ventil für eine Sanitärarmatur. Solche Sanitärarmaturen dienen der bedarfsgerechten Bereitstellung einer Flüssigkeit zum Beispiel an Duschen, Badewannen, Spülbecken oder Waschbecken.

Aus der EP 1 903 267 A1 sind beispielsweise Ventile für eine Sanitärarmatur bekannt, dessen Membranventil durch ein Pilotventil steuerbar ist. Solche Ventile zeichnen sich insbesondere durch geringe Betätigungskräfte aus. Das Pilotventil umfasst einen Steuerstab, der durch einen Druckknopf zwischen einer Schließstellung und einer Öffnungsstellung verstellbar ist. Befindet sich der Steuerstab in der Öffnungsstellung ist das Membranventil zumindest teilweise geöffnet. In der Öffnungsstellung ist der Steuerstab zudem durch einen Drehgriff zwischen einer Mindestdurchflussstellung und einer Maximaldurchflussstellung verstellbar, um über das Membranventil einen Volumenstrom der Flüssigkeit zu steuern. Das Öffnen und Schließen des Ventils einerseits und die Einstellung eines gewünschten Volumenstroms der Flüssigkeit andererseits können somit über den Druckknopf und den Drehgriff unabhängig voneinander gesteuert werden. Dies hat den Vorteil, dass beim Öffnen und Schließen des Ventils ein zuvor eingestellter, gewünschter Volumenstrom der Flüssigkeit nicht erneut eingestellt werden muss. Nachteilig an diesen Ventilen ist jedoch, dass deren ordnungsgemäße Funktion von einem Versorgungsdruck der Flüssigkeit abhängt, mit dem die Flüssigkeit dem Ventil zugeführt wird. Der Versorgungsdruck der Flüssigkeit kann jedoch je nach Einbauort unterschiedlich sein. Ist der Versorgungsdruck zu gering, öffnet sich das Membranventil nicht oder eine Membran des Membranventils beginnt zu schwingen, wenn sich der Steuerstab in der Mindestdurchflussstellung befindet. Aus diesem Grund wird der Steuerstab bei den bekannten Ventilen so ausgelegt, dass in der Mindestdurchflussstellung des Steuerstabs die Membran des Membranventils weit genug geöffnet ist, um die vorgenannten Nachteile auch bei geringen Versorgungsdrücken der Flüssigkeit zu vermeiden. Dies erhöht jedoch eine Mindestdurchflussmenge der Flüssigkeit durch das Membranventil, wenn sich der Steuerstab in der Mindestdurchflussstellung befindet. Hierdurch kann sich ein Wasserverbrauch der Sanitärarmatur erhöhen. Weiterhin reduziert dies einen einstellbaren Bereich der Durchflussmenge der Flüssigkeit bzw. eine Differenz zwischen der Mindestdurchflussmenge und einer Maximaldurchflussmenge der Flüssigkeit.

Aufgabe der Erfindung ist es daher, die mit Bezug auf den Stand der Technik geschilderten Probleme zumindest teilweise zu lösen und insbesondere ein Ventil anzugeben, das an unterschiedliche Versorgungsdrücken der Flüssigkeit anpassbar ist.

Diese Aufgabe wird gelöst mit einem Ventil gemäß den Merkmalen des unabhängigen Patentanspruchs. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Ventil für eine Sanitärarmatur bei, das zumindest die folgenden Komponenten aufweist:
- eine Flüssigkeitsführung mit zumindest einem Zulauf und zumindest einem Ablauf für eine Flüssigkeit;
- ein Membranventil mit einer Membran und einer mit dem zumindest einen Zulauf verbundenen Gegendruckkammer; und
- einen Steuerstab zum Steuern des Membranventils, wobei der Steuerstab mit einem Druccknopf zwischen einer Schließstellung, in der das Membranventil geschlossen ist, und einer Öffnungsstellung, in der das Membranventil zumindest teilweise geöffnet ist, verstellbar ist, wobei der Steuerstab in der Öffnungsstellung durch einen Drehgriff zwischen einer Mindestdurchflussstellung, in der eine Mindestdurchflussmenge der Flüssigkeit durch den zumindest einen Ablauf fließt, und einer Maximaldurchflussstellung, in der eine Maximaldurchflussmenge der Flüssigkeit durch den zumindest einen Ablauf fließt, verstellbar ist, und wobei die Mindestdurchflussstellung des Steuerstabs variabel einstellbar ist.

Das Ventil ist beispielsweise mit einer Schlauchleitung und/oder Rohrleitung mit einer Sanitärarmatur verbindbar. Sanitärarmaturen dienen der bedarfsgerechten Bereitstellung einer Flüssigkeit, insbesondere Wasser, an beispielsweise Duschen, Badewannen, Spülbecken oder Waschbecken.

Das Ventil umfasst eine Flüssigkeitsführung mit zumindest einem Zulauf, über den das Ventil beispielsweise an eine Flüssigkeitsquelle, zum Beispiel ein öffentliches Flüssigkeitsversorgungsnetz, anschließbar ist. Die über den zumindest einen Zulauf zuströmende Flüssigkeit, beispielsweise Wasser, ist durch die Flüssigkeitsführung, bei der es sich beispielsweise um ein Kunststoffspritzgussteil handeln kann, einem Membranventil des Ventils zuführbar. Hierzu können in der Flüssigkeitsführung ein Zulaufkanal und/oder eine Zulaufkammer ausgebildet sein. Durch das Membranventil ist ein Ablauf der Flüssigkeitsführung verschließbar oder öffenbar. Der Ablauf kann in einem montierten Zustand des Ventils zu der Sanitärarmatur führen. Das Membranventil umfasst eine Membran und eine mit dem zumindest einen Zulauf verbundene Gegendruckkammer. Die Flüssigkeit kann aus dem Zulaufkanal und/oder der Zulaufkammer der Flüssigkeitsführung über eine Ausgleichsbohrung in der Membran des Membranventils und/oder sonstigen Komponenten des Ventils in die Gegendruckkammer des Membranventils fließen.

Weiterhin ist das Membranventil durch einen Steuerstab steuerbar. Hierzu erstreckt sich der Steuerstab insbesondere in einen Steuerkanal der Membran. Der Steuerkanal verbindet die Gegendruckkammer mit dem Ablauf und erstreckt sich insbesondere durch die Membran. In dem Steuerkanal ist insbesondere eine ringförmige Dichtung angeordnet, die beispielsweise nach Art eines O-Rings ausgebildet ist. Der Steuerstab erstreckt sich insbesondere durch die Dichtung. Zudem weist der Steuerstab einen Dichtungsabschnitt und einen Aussparungsabschnitt auf. Im Bereich des Dichtungsabschnitt ist ein erster Durchmesser des Steuerstabs entlang einer Längsachse des Steuerstabs insbesondere (im Wesentlichen) konstant. Im Bereich des Aussparungsabschnitt weist der Steuerstab insbesondere einen zweiten Durchmesser auf, der kleiner ist als der erste Durchmesser des Steuerstabs im Dichtungsabschnitt. Der Steuerstab ist mit einem Druckknopf zwischen einer Schließstellung, in der das Membranventil geschlossen ist, und einer Öffnungsstellung, in der das Membranventil zumindest teilweise geöffnet ist, verstellbar. Der Steuerstab ist insbesondere durch wiederholtes Drücken des Druckknopfs zwischen der Schließstellung und der Öffnungsstellung verstellbar. Hierbei wird der Steuerstab in dem Steuerkanal insbesondere in Richtung seiner Längsachse bewegt. In der Schließstellung des Steuerstabs kontaktiert die Dichtung des Steuerkanals den Dichtungsabschnitt des Steuerstabs, sodass keine Flüssigkeit aus der Gegendruckkammer über den Steuerkanal in den Ablauf fließen kann. Hierdurch weist die Flüssigkeit auf beiden Seiten der Membran einen gleichen Flüssigkeitsdruck auf. Da die Membran die Gegendruckkammer mit einer größeren Fläche begrenzt als den Zulaufkanal und/oder die Zulaufkammer der Flüssigkeitsführung, ist die aus dem Flüssigkeitsdruck der Flüssigkeit in der Gegendruckkammer resultierende Kraft auf die Membran größer als die aus dem Flüssigkeitsdruck der Flüssigkeit in dem Zulaufkanal und/oder der Zulaufkammer resultierende Kraft. Hierdurch wird die Membran auf einen Ventilsitz gedrückt, sodass das Membranventil geschlossen ist.

In der Öffnungsstellung des Steuerstabs ist der Steuerstab insbesondere zumindest teilweise aus dem Steuerkanal heraus bewegt, sodass sich die Dichtung des Steuerkanals im Bereich des Aussparungsabschnitts des Steuerstabs befindet. Hierdurch wird in dem Steuerkanal ein Ringspalt gebildet, durch den Flüssigkeit aus der Gegendruckkammer in den Ablauf fließen kann. Hierdurch sinkt der Flüssigkeitsdruck in der Gegendruckkammer, wodurch die Membran von dem Ventilsitz so weit abgehoben wird, bis dass ein Druckausgleich oberhalb und unterhalb der Membran erfolgt ist. Das Membranventil ist in der Öffnungsstellung des Steuerstabs zumindest teilweise geöffnet. Damit das Membranventil öffnet, muss der Flüssigkeitsdruck in der Gegendruckkammer durch den stationären Zustand, der sich zwischen der über die Ausgleichsöffnung nachfließenden Flüssigkeit und der über den Steuerkanal aus der Gegendruckkammer abfließenden Flüssigkeit einstellt, stark genug abfallen. Hierzu kann der Steuerkanal größer bzw. mit einem größeren Durchmesser ausgeführt sein als die Ausgleichsbohrung.

In der Öffnungsstellung ist der Steuerstab durch einen Drehgriff zwischen einer Mindestdurchflussstellung, in der eine Mindestdurchflussmenge der Flüssigkeit durch den zumindest einen Ablauf fließt, und einer Maximaldurchflussstellung, in der eine Maximaldurchflussmenge der Flüssigkeit durch den zumindest einen Ablauf fließt, verstellbar. Die Verstellung zwischen der Mindestdurchflussstellung und der Maximaldurchflussstellung des Steuerstabs erfolgt durch Drehung des Drehgriffs. Der Drehgriff kann hierzu beispielsweise mit einem Drehwinkel (insbesondere um die Längsachse des Steuerstabs) drehbar sein, der zwischen 45° und 360°, bevorzugt (circa) 180° beträgt. Der Druckknopf ist zumindest teilweise in dem Drehgriff angeordnet und/oder in Richtung der Längsachse des Steuerstabs relativ zu dem Drehgriff bewegbar. Bei der Verstellung des Steuerstabs bewegt sich der Steuerstab insbesondere in Richtung seiner Längsachse in dem Steuerkanal. Die Dichtung des Steuerkanals befindet sich während der Bewegung des Steuerstabs zwischen der Mindestdurchflussstellung und der Maximaldurchflussstellung insbesondere im Bereich des Aussparungsabschnitts des Steuerstabs, sodass Flüssigkeit aus der Gegendruckkammer durch den Steuerkanal in den Ablauf fließen kann. Aufgrund des Drucks der Flüssigkeit oberhalb und unterhalb der Membran folgt die Membran dabei der Bewegung des Steuerstabs. In der Mindestdurchflussstellung ist der Steuerstab so weit in Richtung der Membran bzw. in den Steuerkanal der Membran verstellt, dass die Membran mit einer minimalen Höhe von dem Ventilsitz abgehoben ist. In der Maximaldurchflussstellung ist der Steuerstab soweit von der Membran wegbewegt bzw. aus dem Steuerkanal der Membran verstellt, dass die Membran mit einer maximalen Höhe von dem Ventilsitz abgehoben ist. Das Membranventil ist in der Maximaldurchflussstellung des Steuerstabs daher maximal geöffnet.

Die Mindestdurchflussstellung des Steuerstabs ist variabel einstellbar. Dies kann insbesondere bedeuten, dass die Position des Steuerstabs, die der Steuerstab in der Mindestdurchflussstellung erreicht, variabel einstellbar ist. Weiterhin kann dies bedeuten, dass die Position des Steuerstabs in der Mindestdurchflussstellung bei gleicher Drehstellung des Drehgriffs variabel einstellbar ist. Hierzu kann der Steuerstab in der Mindestdurchflussstellung in Richtung seiner Längsachse relativ zu dem Drehgriff und/oder dem Druckknopf verstellbar sein. Weiterhin kann die Mindestdurchflussstellung des Steuerstabs an den Versorgungsdruck der Flüssigkeit anpassbar sein. Hierzu wird die Mindestdurchflussstellung des Steuerstabs derart eingestellt, dass das Membranventil in der Mindestdurchflussstellung des Steuerstabs sicher öffnet, dass kein Schwingen der Membran auftritt und dass die Membran nur minimal von dem Ventilsitz abgehoben wird. Hierdurch wird weiter der über den Drehgriff einstellbare Bereich der Durchflussmenge der Flüssigkeit bzw. die Differenz zwischen der Mindestdurchflussmenge und der Maximaldurchflussmenge der Flüssigkeit maximiert. Zudem kann der Einfluss von Bauteiltoleranzen, die sich auf die Position des Steuerstabs auswirken, ausgeglichen werden.

Die Mindestdurchflussstellung des Steuerstabs kann ohne Betätigung der Drucktaste oder des Drehgriffs variabel einstellbar sein. Insbesondere kann die Mindestdurchflussstellung des Steuerstabs ohne Betätigung der Drucktaste und/oder des Drehgriffs variabel einstellbar sein.

Die Mindestdurchflussstellung des Steuerstabs kann während des Betriebs des Ventils variabel einstellbar sein. Hierzu ist der Steuerstab insbesondere während des Betriebs des Ventils zugänglich bzw. zugänglich machbar.

Der Steuerstab ist mit einem Kulissenstein verbunden, über den der Steuerstab bei einer Drehung des Drehgriffs zwischen der Mindestdurchflussstellung und der Maximaldurchflussstellung verstellbar ist. Zur Einstellung der Mindestdurchflussstellung des Steuerstabs kann ein Befestigungsort des Kulissensteins an dem Steuerstab, insbesondere in Richtung der Längsachse des Steuerstabs, veränderbar sein.

Der Steuerstab ist über ein erstes Gewinde mit dem Kulissenstein verbunden. Über das erste Gewinde ist insbesondere der Befestigungsort des Kulissensteins an dem Steuerstab veränderbar. Hierzu ist der Steuerstab gegenüber dem Kulissenstein insbesondere drehbar.

Der Kulissenstein ist über ein zweites Gewinde mit dem Drehgriff verbunden. Das zweite Gewinde kann insbesondere unmittelbar oder mittelbar zwischen dem Kulissenstein und dem Drehgriff ausgebildet sein. Insbesondere kann das zweite Gewinde auch zwischen dem Kulissenstein und einer Gewindehülse ausgebildet sein, die verdrehfest mit dem Drehgriff verbunden ist. Dies kann insbesondere bedeuten, dass die Gewindehülse mit dem Drehgriff drehbar ist. Durch die Drehung des Drehgriffs bzw. der Gewindehülse wird der Kulissenstein mit dem Steuerstab aufgrund des zweiten Gewindes in Richtung der Längsachse des Steuerstabs relativ zu dem Drehgriff bzw. der Gewindehülse verstellt.

Das erste Gewinde weist eine größere Gewindesteigung als das zweite Gewinde auf.

Das erste Gewinde und das zweite Gewinde können unterschiedliche Drehrichtungen aufweisen. Beispielsweise kann es sich bei dem ersten Gewinde um ein Linksgewinde und dem zweiten Gewinde um ein Rechtsgewinde oder umgekehrt handeln.

Zum Steuern des Membranventils kann ein die Gegendruckkammer mit dem zumindest einen Ablauf verbindender Steuerkanal der Membran durch den Steuerstab verschließbar oder zumindest teilweise öffenbar sein.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: ein Ventil in einem Längsschnitt;
- Fig. 2:: das Ventil in einer perspektivischen Darstellung; und
- Fig. 3:: ein Diagramm mit Durchflussmengen des Ventils zwischen einer Mindestdurchflussstellung und einer Maximaldurchflussstellung des Ventils.

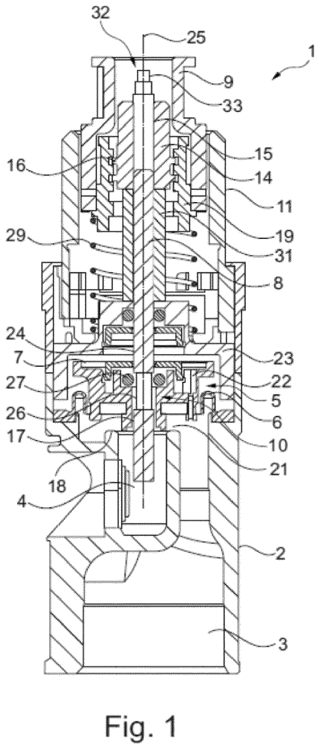

Die Fig. 1 zeigt ein Ventil 1 in einem Längsschnitt. Das Ventil 1 umfasst eine Flüssigkeitsführung 2 mit einem Zulauf 3 für eine Flüssigkeit. An den Zulauf 3 ist eine hier nicht dargestellte Flüssigkeitsleitung anschließbar, über die dem Ventil 1 Flüssigkeit mit einem Versorgungsdruck zuführbar ist. Weiterhin weist das Ventil 1 ein Membranventil 5 mit einer Membran 6 auf. Die Membran 6 ist zumindest teilweise elastisch ausgebildet und bewegbar in der Flüssigkeitsführung 2 gelagert. Die Flüssigkeit strömt von dem Zulauf 3 der Flüssigkeitsführung 2 in eine ringförmige Zulaufkammer 21 und von dort durch einen Ausgleichskanal 22 der Membran 6 in eine Gegendruckkammer 7. Die Gegendruckkammer 7 befindet sich auf einer der Zulaufkammer 21 gegenüberliegenden Seite der Membran 6 und zumindest teilweise durch ein Begrenzungselement 23 begrenzt. Das Membranventil 5 ist durch einen Steuerstab 8 steuerbar. Der Steuerstab 8 erstreckt sich hierzu durch einen Steuerkanal 17 der Membran 8, der die Gegendruckkammer 7 mit einem Ablauf 4 verbindet. Weiterhin weist der Steuerstab 8 einen Dichtungsabschnitt 24 mit einem entlang einer Längsachse 25 des Steuerstabs 8 im Wesentlichen konstanten Durchmesser und einen ringförmigen Aussparungsabschnitt 26 mit einem kleineren Durchmesser als der Dichtungsabschnitt 24 auf. Der Steuerstab 8 ist in einer vertikalen Richtung (d. h. parallel zu seiner Längsachse 25) in dem Steuerkanal 17 der Membran 6 bewegbar. Ist der Steuerstab 8 in einer Schließstellung (d. h. in der vertikalen Richtung weiter unten als in der Fig. 1 dargestellt), befindet sich der Dichtungsabschnitt 24 des Steuerstabs 8 im Bereich einer Dichtung 27 (hier als O-Ring ausgebildet) der Membran 6, sodass keine Flüssigkeit aus der Gegendruckkammer 7 durch den Steuerkanal 17 in den Ablauf 4 abfließen kann. Im geschlossenen Zustand der Gegendruckkammer 7 herrscht in der ersten Zulaufkammer 21 und der Gegendruckkammer 7 der gleiche Flüssigkeitsdruck. Da die Membran 4 die Gegendruckkammer 7 mit einer größeren Fläche begrenzt als die Zulaufkammer 7, ist die aus dem Flüssigkeitsdruck der Flüssigkeit in der Gegendruckkammer 7 resultierende Kraft auf die Membran 6 größer als die aus dem Flüssigkeitsdruck der Flüssigkeit in der Zulaufkammer 21 resultierende Kraft. Hierdurch wird die Membran 6 auf einen ringförmigen Ventilsitz 18 gedrückt, sodass keine Flüssigkeit von dem Zulauf 3 über den Ablauf 4 abfließen kann. Der Ventilsitz 18 ist an einem längsseitigen Ende des Ablaufs 6 sowie an der Flüssigkeitsführung 2 ausgebildet.

Der Steuerstab 8 ist parallel zu seiner Längsachse 25 durch einen Druckknopf 9 zwischen der oben beschriebenen Schließstellung und einer in der Fig. 1 gezeigten Öffnungsstellung 10 verstellbar. Wird der Druckknopf 9 durch einen Benutzer des Ventils 1 nach unten gedrückt, bewegt sich der Steuerstab 8 mit dem Druckkopf 9 nach unten, bis der Steuerstab 8 die Schließstellung erreicht, in der das Membranventil 5 geschlossen ist. Durch erneutes Drücken des Druckknopfs 9 wird der Steuerstab 8 mit dem Druckknopf 9 in der vertikalen Richtung nach oben verstellt, bis dass der Steuerstab 8 die hier gezeigte Öffnungsstellung 10 erreicht. In der Öffnungsstellung 10 befindet sich der Aussparungsabschnitt 26 des Steuerstabs 8 im Bereich der Dichtung 27 der Membran 6, sodass Flüssigkeit aus der Gegendruckkammer 7 über den Steuerkanal 17 in den Ablauf 4 abfließen kann. Hierdurch sinkt der Flüssigkeitsdruck in der Gegendruckkammer 7, sodass die Membran 6 von dem Ventilsitz 18 abgehoben wird. Im geöffneten Zustand der Membran 6 fließt die Flüssigkeit von der Zulaufkammer 21 über den Ventilsitz 18 direkt in den Ablauf 4. Über den Ablauf 4 ist die Flüssigkeit einer hier nicht dargestellten Sanitärarmatur zuführbar.

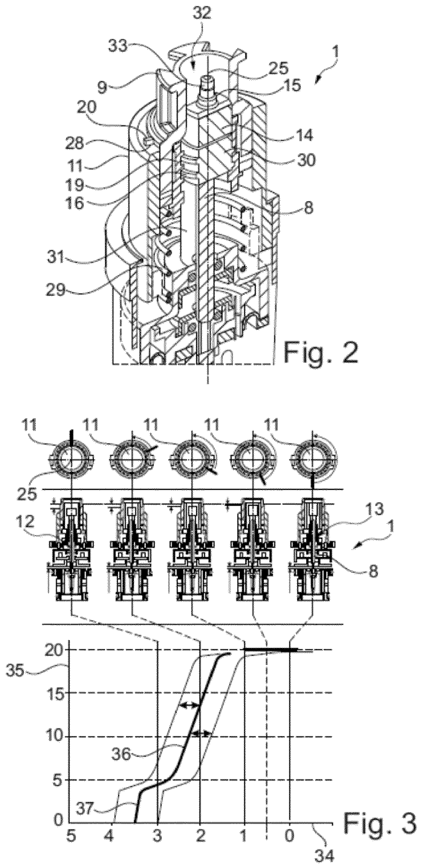

In der hier gezeigten Öffnungsstellung 10 ist der Steuerstab 8 durch einen Drehgriff 11 zwischen einer Mindestdurchflussstellung 12 (vgl. Fig. 3) und einer Maximaldurchflussstellung 13 (vgl. ebenfalls Fig. 3) verstellbar. Zur Verstellung des Steuerstabs 8 zwischen der Mindestdurchflussstellung 12 und der Maximaldurchflussstellung 13 ist der Drehgriff 11 durch einen Benutzer hier um 180° drehbar. In der Mindestdurchflussstellung 12 ist der Steuerstab 8 durch den Drehgriff 11 in der vertikalen Richtung so weit nach unten verstellt, dass das Membranventil 5 noch teilweise geöffnet bzw. die Membran 6 noch von dem Ventilsitz 18 (geringfügig) abgehoben ist, sodass eine Mindestdurchflussmenge der Flüssigkeit durch den Ablauf 4 fließt. In der Maximaldurchflussstellung 13 ist der Steuerstab 8 durch den Drehgriff 11 in der vertikalen Richtung so weit nach oben verstellt, dass das Membranventil 5 vollständig geöffnet bzw. die Membran 6 vollständig von dem Ventilsitz 18 abgehoben ist, sodass eine maximale Durchflussmenge der Flüssigkeit durch den Ablauf 4 fließt. Zur Verstellung des Steuerstabs 8 zwischen der Mindestdurchflussstellung 12 und der Maximaldurchflussstellung 13 ist der Drehgriff 11 über den Druckknopf 9 verdrehfest mit einer Gewindehülse 19 verbunden. Hierzu weist der Druckknopf 9 in der Fig. 2 gezeigte und sich parallel zu der Längsachse 25 des Steuerstabs 8 erstreckende Vorsprünge 20 auf, die durch Nuten 28 des Drehgriffs 11 geführt sind, die sich ebenfalls parallel zu der Längsachse 25 des Drehgriffs 11 erstrecken. Entsprechende Vorsprünge und Nuten sind auch zwischen dem Druckknopf 9 und der Gewindehülse 19 ausgebildet, die jedoch in der Fig. 1 und 2 nicht sichtbar sind. Durch Drehen des Drehgriffs 11 um die Längsachse 25 drehen sich somit ebenfalls der Druckknopf 9 und die Gewindehülse 19. Gleichzeitig sind der Druckknopf 9 und die Gewindehülse 19 jedoch entgegen einer Federkraft einer Feder 29 in der vertikalen Richtung nach unten bzw. in Richtung der Federkraft der Feder 29 in der vertikalen Richtung nach oben relativ zu dem Drehgriff 11 verstellbar. Der Steuerstab 8 ist über ein erstes Gewinde 15 mit einem Kulissenstein 14 verbunden. Der Kulissenstein 14 ist wiederum über ein zweites Gewinde 16 mit der Gewindehülse 19 verbunden und weist zwei gegenüberliegende flache Halteflächen 30 auf, die an einem Halteelement 31 anliegen, sodass die Gewindehülse 19 nicht drehbar ist. Durch Drehen des Drehgriffs 11 dreht sich die Gewindehülse 19, sodass der Kulissenstein 14 mit dem Steuerstab 8 parallel zu der Längsachse 25 verstellt wird.

Zur variablen Einstellung bzw. Justage der Mindestdurchflussstellung 12 (vgl. Fig. 3) des Steuerstabs 8 ist der Steuerstab 8 relativ zu dem Kulissenstein 14 verdrehbar, sodass der Steuerstab 8 über das erste Gewinde 15 in Richtung seiner Längsachse 25 relativ zu dem Kulissenstein 14 verstellbar ist. Hierdurch ist die Mindestdurchflussstellung 12 an den Versorgungsdruck der Flüssigkeit anpassbar, sodass die Mindestdurchflussmenge der Flüssigkeit in der Mindestdurchflussstellung 12 des Steuerstabs 8 einen gewünschten Wert erreicht. Zur Drehung des Steuerstabs 8 relativ zu dem Kulissenstein 14, kann der Steuerstab 8 an seinem längsseitigen Ende 32 eine Kraftangriffskontur 33, beispielsweise nach Art eines Schraubenkopfes, aufweisen. Der Drehgriff 11 und/oder die Kraftangriffskontur 33 können durch eine hier nicht gezeigte Blende verblendet sein. Diese ist lösbar an dem Drehgriff 11 befestigt, sodass die Kraftangriffskontur 33 auch während des Betriebs des Ventils 1 zugänglich ist.

Die Fig. 3 zeigt ein Diagramm, bei dem auf einer x-Achse 34 eine Stellung des Steuerstabs 8 des Ventils 1 und auf einer y-Achse 35 die zugehörige Durchflussmenge der Flüssigkeit in L/min (Liter pro Minute) durch den Ablauf 4 des Ventils 1 aufgetragen sind. An der Position 5 auf der x-Achse 34 befindet sich der Steuerstab 8 in der Schließstellung. An den Positionen 3 bis 0 auf der x-Achse 34 befindet sich der Steuerstab 8 in der in der Fig. 1 gezeigten Öffnungsstellung 10, in der das Membranventil 5 zumindest teilweise geöffnet ist. An der Position 3 auf der x-Achse 34 ist der Drehgriff 11 zudem um 0° gedreht, sodass sich der Steuerstab 8 in der Mindestdurchflussstellung 12 befindet. An der Position 2 auf der x-Achse 34 ist der Drehgriff 11 um 60°, an der Position 1 auf der x-Achse 34 um 125° und an der Position 0 auf der x-Achse 34 um 180° gedreht. An der Position 0 der x-Achse 34 ist der Drehgriff 11 vollständig (im Uhrzeigersinn) um die Längsachse 25 gedreht, sodass sich der Steuerstab 8 in der Maximaldurchflussstellung 13 befindet. Ein Graph 36 verdeutlicht den Verlauf der Durchflussmenge in Abhängigkeit von der Stellung des Steuerstabs 8. Der Graph 36 ist durch Einstellung der Mindestdurchflussstellung 12 des Steuerstabs 8 nach links und rechts verstellbar. Die Einstellung der Mindestdurchflussstellung 12 des Steuerstabs 8 erfolgt bevorzugt derart, dass ein unterer Bereich 37 des Graphs 36 mit einer hohen Steigung nicht im Bereich der Mindestdurchflussstellung 12, d. h. an Position 3 auf der x-Achse 34, liegt, sondern links davon.

Durch die vorliegende Erfindung ist das Ventil an unterschiedliche Versorgungsdrücken anpassbar.

### Bezugszeichenliste

- 1: Ventil
- 2: Flüssigkeitsführung
- 3: Zulauf
- 4: Ablauf
- 5: Membranventil
- 6: Membran
- 7: Gegendruckkammer
- 8: Steuerstab
- 9: Druckknopf
- 10: Öffnungsstellung
- 11: Drehgriff
- 12: Mindestdurchflussstellung
- 13: Maximaldurchflussstellung
- 14: Kulissenstein
- 15: erstes Gewinde
- 16: zweites Gewinde
- 17: Steuerkanal
- 18: Ventilsitz
- 19: Gewindehülse
- 20: Vorsprung
- 21: Zulaufkammer
- 22: Ausgleichskanal
- 23: Begrenzungselement
- 24: Dichtungsabschnitt
- 25: Längsachse
- 26: Aussparungsabschnitt
- 27: Dichtung
- 28: Nut
- 29: Feder
- 30: Haltefläche
- 31: Halteelement
- 32: längsseitiges Ende
- 33: Kraftangriffskontur
- 34: x-Achse
- 35: y-Achse
- 36: Graph
- 37: Bereich

## Patentansprüche

1. Ventil (1) für eine Sanitärarmatur, aufweisend:
- eine Flüssigkeitsführung (2) mit zumindest einem Zulauf (3) und zumindest einem Ablauf (4) für eine Flüssigkeit;
- ein Membranventil (5) mit einer Membran (6) und einer mit dem zumindest einen Zulauf (3) verbundenen Gegendruckkammer (7); und
- einen Steuerstab (8) zum Steuern des Membranventils (5), wobei der Steuerstab (8) mit einem Druckknopf (9) zwischen einer Schließstellung, in der das Membranventil (5) geschlossen ist, und einer Öffnungsstellung (10), in der das Membranventil (5) zumindest teilweise geöffnet ist, verstellbar ist, wobei der Steuerstab (8) in der Öffnungsstellung (10) durch einen Drehgriff (11) zwischen einer Mindestdurchflussstellung (12), in der eine Mindestdurchflussmenge der Flüssigkeit durch den zumindest einen Ablauf (4) fließt, und einer Maximaldurchflussstellung (13), in der eine Maximaldurchflussmenge der Flüssigkeit durch den zumindest einen Ablauf (4) fließt, verstellbar ist, und **dadurch gekennzeichnet, dass** die Mindestdurchflussstellung (12) des Steuerstabs (8) variabel einstellbar ist,
wobei der Steuerstab (8) mit einem Kulissenstein (14) verbunden ist, über den der Steuerstab (8) bei einer Drehung des Drehgriffs (11) zwischen der Mindestdurchflussstellung (12) und der Maximaldurchflussstellung (13) verstellbar ist, wobei der Steuerstab (8) über ein erstes Gewinde (15) mit dem Kulissenstein (14) verbunden ist, wobei der Kulissenstein (14) über ein zweites Gewinde (16) mit dem Drehgriff (11) verbunden ist, wobei das erste Gewinde (15) eine größere Gewindesteigung als das zweite Gewinde (16) aufweist.

2. Ventil (1) nach Patentanspruch 1, wobei die Mindestdurchflussstellung (12) des Steuerstabs (8) ohne Betätigung der Druckknopf (9) oder des Drehgriffs (11) variabel einstellbar ist.

3. Ventil (1) nach einem der vorhergehenden Patentansprüche, wobei die Mindestdurchflussstellung (12) des Steuerstabs (8) während des Betriebs des Ventils (1) variabel einstellbar ist.

4. Ventil (1) nach einem der vorhergehenden Patentansprüche, wobei die Mindestdurchflussstellung (12) des Steuerstabs (8) durch eine Änderung einer Lage des Steuerstabs (8) zu dem Kulissenstein (14) variabel einstellbar ist.

5. Ventil (1) nach einem der vorhergehenden Patentansprüche, wobei das erste Gewinde (15) und das zweite Gewinde (16) unterschiedliche Drehrichtungen aufweisen.

6. Ventil (1) nach einem der vorhergehenden Patentansprüche, wobei zum Steuern des Membranventils (5) ein die Gegendruckkammer (7) mit dem zumindest einen Ablauf (4) verbindender Steuerkanal (17) der Membran (6) durch den Steuerstab (8) verschließbar oder zumindest teilweise öffenbar ist.

## Claims

1. A valve (1) for a sanitary fitting, comprising
- a liquid duct (2) with at least one inlet (3) and at least one outlet (4) for a liquid;
- a membrane valve (5) with a membrane (6) and a counterpressure chamber (7) connected to the at least one inlet (3); and
- a control rod (8) for controlling the membrane valve (5), wherein the control rod (8) can be adjusted by means of a push button (9) between a closed position, in which the membrane valve (5) is closed, and an open position (10), in which the membrane valve (5) is at least partially open, wherein the control rod (8) can be adjusted in the open position (10) by means of a rotary handle (11) between a minimum flow position (12), in which a minimum flow rate of the liquid flows through the at least one outlet (4), and a maximum flow position (13), in which a maximum flow rate of the liquid flows through the at least one outlet (4), and
**characterized in that**
the minimum flow position (12) of the control rod (8) is variably adjustable,
wherein the control rod (8) is connected to a sliding block (14) via which the control rod (8) can be adjusted between the minimum flow position (12) and the maximum flow position (13) when the rotary handle (11) is rotated, wherein the control rod (8) is connected to the sliding block (14) via a first thread (15), wherein the sliding block (14) is connected to the rotary handle (11) via a second thread (16), wherein the first thread (15) has a greater thread pitch than the second thread (16) .

2. The valve (1) according to claim 1, wherein the minimum flow position (12) of the control rod (8) can be variably adjusted without actuating the push button (9) or the rotary handle (11).

3. The valve (1) according to any one of the preceding claims, wherein the minimum flow position (12) of the control rod (8) can be variably adjusted during operation of the valve (1).

4. The valve (1) according to any one of the preceding claims, wherein the minimum flow position (12) of the control rod (8) can be variably adjusted by changing a position of the control rod (8) relative to the sliding block (14).

5. The valve (1) according to any one of the preceding claims, wherein the first thread (15) and the second thread (16) have different directions of rotation.

6. The valve (1) according to any one of the preceding patent claims, wherein, for controlling the membrane valve (5), a control channel (17) of the membrane (6) connecting the counterpressure chamber (7) to the at least one outlet (4) can be closed or at least partially opened by the control rod (8).

## Revendications

1. Soupape (1), destinée à une robinetterie sanitaire, comportant :
- une conduite de liquide (2), avec au moins une arrivée (3) et au moins une évacuation (4) pour un liquide ;
- une soupape à membrane (5), avec une membrane (6) et une chambre (7) de contre-pression reliée avec l'au moins une arrivée (3) ; et
- une tige de commande (8), destinée à commander la soupape à membrane (5), la tige de commande (8) état ajustable à l'aide d'un bouton poussoir (9) entre une position de fermeture, dans laquelle la soupape à membrane (5) est fermée, et une position d'ouverture (10), dans laquelle la soupape à membrane (5) est au moins partiellement ouverte, dans la position d'ouverture (10), la tige de commande (8) étant ajustable par une poignée rotative (11) entre une position (12) de débit minimum, dans laquelle un débit minimum du liquide coule à travers l'au moins une évacuation (4), et une position (13) de débit maximum, dans laquelle un débit maximum du liquide coule à travers l'au moins une évacuation (4) **caractérisée en ce que** la position (12) de débit minimum de la tige de commande (8) est réglable de manière variable, la tige de commande (8) étant reliée avec un coulisseau (14), par l'intermédiaire duquel la tige de commande (8) est ajustable, lors d'une rotation de la poignée rotative (11) entre la position (12) de débit minimum et la position (13) de débit maximum, la tige de commande (8) étant reliée par l'intermédiaire d'un premier filetage (15) avec le coulisseau (14), le coulisseau (14) étant relié par l'intermédiaire d'un deuxième filetage (16) avec la poignée rotative (11), le premier filetage (15) présentant un pas de filetage supérieur à celui du deuxième filetage (16) .

2. Soupape (1) selon la revendication 1 du brevet, la position (12) de débit minimum de la tige de commande (8) étant réglage de manière variable sans actionnement du bouton poussoir (9) ou de la poignée rotative (11).

3. Soupape (1) selon l'une quelconque des revendications précédentes du brevet, la position (12) de débit minimum de la tige de commande (8) étant réglable de manière variable en cours de fonctionnement de la soupape (1).

4. Soupape (1) selon l'une quelconque des revendications précédentes du brevet, la position (12) de débit minimum de la tige de commande (8) étant réglable de manière variable par une modification d'un positionnement de la tige de commande (8) par rapport au coulisseau (14).

5. Soupape (1) selon l'une quelconque des revendications précédentes du brevet, le premier filetage (15) et le deuxième filetage (16) présentant des directions de rotation différentes.

6. Soupape (1) selon l'une quelconque des revendications précédentes du brevet, pour commander la soupape à membrane (5), un canal de commande (17) de la membrane (6) reliant la chambre (7) de contre-pression avec l'au moins une évacuation (4) pouvant être fermé ou au moins partiellement ouvert par la tige de commande (8).
